## Europäisches Patentamt
## European Patent Office
## Office européen des brevets

(11) Veröffentlichungsnummer : **0 346 346 B1**

(12) **EUROPÄISCHE PATENTSCHRIFT**

(45) Veröffentlichungstag der Patentschrift :
06.05.92 Patentblatt 92/19

(21) Anmeldenummer : **88901231.6**

(22) Anmeldetag : **03.02.88**

(86) Internationale Anmeldenummer :
**PCT/DE88/00051**

(87) Internationale Veröffentlichungsnummer :
**WO 88/06367 25.08.88 Gazette 88/19**

(51) Int. Cl.⁵ : **H02K 1/24, H02K 19/22**

(54) **WECHSELSTROMGENERATOR MIT KLAUENPOLROTOR.**

(30) Priorität : **11.02.87 DE 3704156**

(43) Veröffentlichungstag der Anmeldung :
**20.12.89 Patentblatt 89/51**

(45) Bekanntmachung des Hinweises auf die
Patenterteilung :
**06.05.92 Patentblatt 92/19**

(84) Benannte Vertragsstaaten :
**DE FR GB IT**

(56) Entgegenhaltungen :
**FR-A- 1 304 822**
**FR-A- 2 256 572**
**US-A- 3 184 625**

(73) Patentinhaber : **ROBERT BOSCH GMBH**
**Postfach 30 02 20**
**W-7000 Stuttgart 30 (DE)**

(72) Erfinder : **FRISTER, Manfred**
**Wolfsgalgen 29**
**W-7141 Schwieberdingen (DE)**

## Beschreibung

Die Erfindung bezieht sich auf einen Wechselstromgenerator mit den Merkmalen des Oberbegriffs des Anspruchs 1. Ein derartiger Wechselstromgenerator ist bereits aus der US-PS 3 271 606 bekannt; die darin beschriebenen Klauenpole, deren äußere Oberfläche zu ihrem rückwärtigen Rand hin einen zunehmend größeren Luftspalt zur Ständerbohrung aufweisen, bewirken im Vergleich zu anderen bekannten Klauenpolen mit konstantem Luftspalt eine Verringerung des magnetischen Geräusches, ohne jedoch dabei einen wesentlichen Verlust an magnetischem Fluß zu verursachen.

Aus der US-PS 3 714 484 sind auch schon Klauenpole bekannt, bei denen - in Drehrichtung des Klauenpolrotors gesehen - der rückwärtige Bereich der äußeren Oberfläche jedes Klauenpols als eine in sich verdrehte Fläche vorgesehen ist; diese Gestaltung der Klauenpole soll einen Kompromiß zwischen Geräuschreduzierung und Energieverlust des Generators bewirken.

In beiden vorstehenden Beispielen ist die Herstellung der speziellen Form der Klauenpole infolge hoher Werkzeugkosten teuer.

Der Erfindung liegt demgegenüber die Aufgabe zugrunde, einen Wechselstromgenerator mit einem derartigen Klauenpolrotor zu schaffen, bei dem die Entstehung magnetischer Geräusche infolge optimierter Formgebung der Klauenpole weiter verringert wird, jedoch ohne dabei erhöhte Energieverluste des Wechselstromgenerators einzutauschen; die Klauenpole sollen zudem kostengünstig herstellbar sein.

Diese Aufgabe wird gemäß der Erfindung mittels der im Kennzeichen des Anspruchs 1 aufgeführten Merkmale gelöst. Durch die in den Unteransprüchen aufgeführten Maßnahmen sind vorteilhafte Weiterbildungen und Verbesserungen des im Anspruch 1 angegebenen Wechselstromgenerators möglich.

Ausführungsbeispiele der Erfindung sind in der Zeichnung dargestellt und in der nachfolgenden Beschreibung näher erläutert.

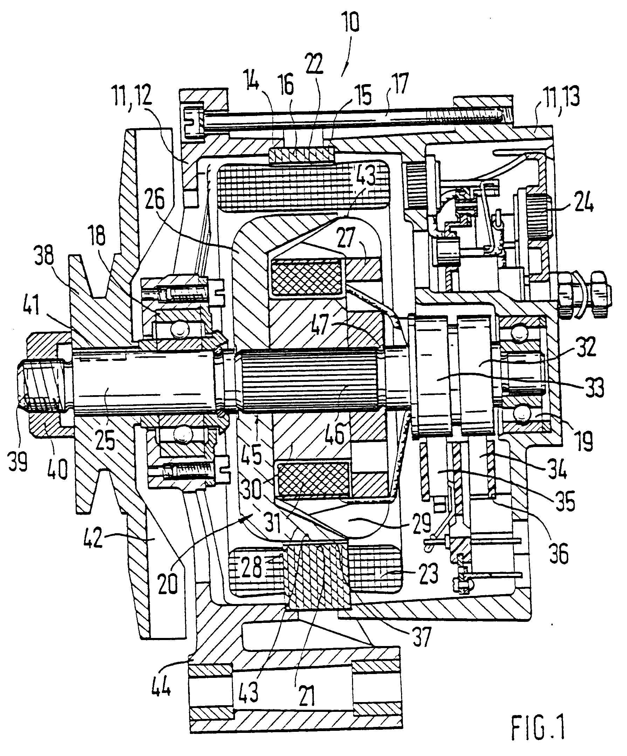

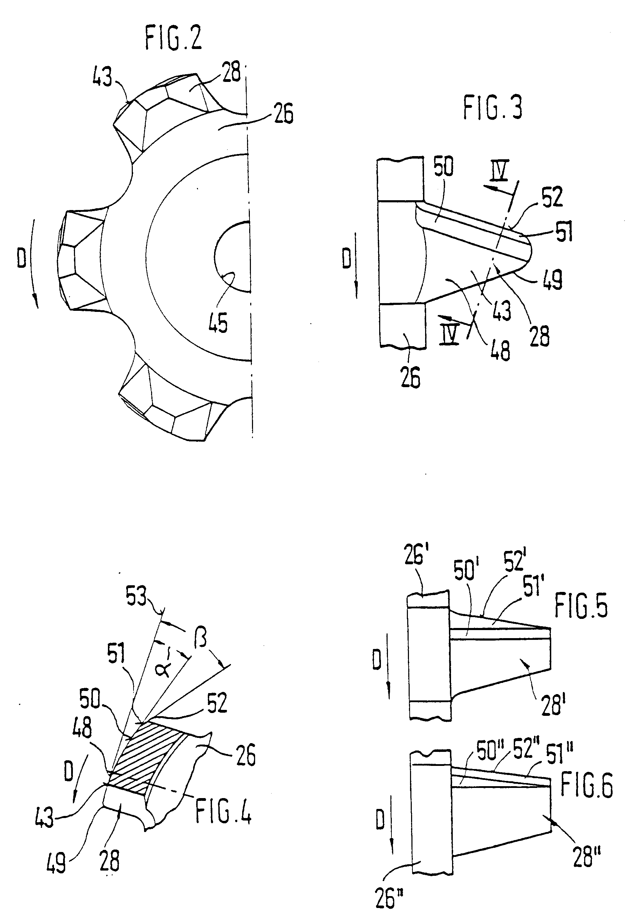

Es zeigen Figur 1 einen Schnitt durch einen Wechselstromgenerator, Figur 2 eine Teilansicht von einem Polrad eines Klauenpolrotors von der Klauenpolseite her, Figur 3 die Draufsicht auf eine äußere Oberfläche eines Klauenpols, Figur 4 einen Querschnitt durch den Klauenpol entlang der Linie IV-IV in Figur 3 und die Figuren 5 und 6 Draufsichten auf die äußere Oberfläche von Klauenpolen anderer Konfiguration gemäß der Erfindung.

Bei dem in Figur 1 gezeigten Wechselstromgenerator 10 handelt es sich um einen Drehstromgenerator in Topfbauart gemäß der Erfindung wie er heute in den meisten Kraftfahrzeugen eingebaut ist. Die Anwendung des Erfindungsgegenstandes ist jedoch nicht auf Drehstromgeneratoren in Topfbauart beschränkt, sondern ist allgemein für Wechselstromgeneratoren mit Klauenpolrotoren anwendbar.

Dieser Wechselstromgenerator 10 besitzt als metallisches Gehäuse 11 zwei topfförmige Lagerschilde 12 und 13, zwischen deren offenen Stirnbereichen 14 und 15 ein Ständer 16 eingespannt ist; zum Verbinden der beiden Lagerschilde 12 und 13 mit dem Ständer 16 dienen als Spannelemente 17 Stehbolzen, welche in den beiden Lagerschilden 12 und 13 festgelegt sind. Die Lagerschilde 12 und 13 enthalten jeweils ein Kugellager 18 bzw. 19 zur drehbaren Aufnahme eines Klauenpolrotors 20. Der Ständer 16 setzt sich aus gegeneinander isolierten Blechen (Lamellen) zusammen, die aus magnetisierbarem Eisen bestehen und zu einem festen Blechpaket zusammengepreßt sind. Der im wesentlichen ringförmige Ständer 16 ist in seiner Ständerbohrung 21 mit Nuten 22 zur Aufnahme von Wechselstromwicklungen 23 versehen. Die Wechselstromwicklungen 23 sind bei diesem Drehstromgenerator 10 drei um 120 Grad räumlich versetzte wellenförmige Wicklungen, die bei Betrieb des Wechselstromgenerators einen dreiphasigen nutzbaren Generatorstrom an einen am Wechselstromgenerator 10 befestigten, angedeuteten Gleichrichter 24 abgeben; der Gleichrichter 24 formt den Drehstrom in Gleichstrom um.

Der Klauenpolrotor 20 setzt sich im wesentlichen zusammen aus einer in den Kugellagern 18 und 19 drehbar aufgenommenen Rotorwelle 25, zwei auf dieser Rotorwelle 25 mit Abstand zueinander festgelegten Polrädern 26 und 27 mit ihren Klauenpolen 28 bzw. 29, einem zwischen den beiden Polrädern 26 und 27 angeordneten, auch auf der Rotorwelle 25 aufgeschobenem Polkern 30 aus magnetisierbarem Material, einer auf den Polkern 30 aufgewickelten und von den beiden Polrädern 26 und 27 sowie den nahezu parallel zur Rotorwelle 25 verlaufenden Klauenpolen 28 und 29 umfaßten Erregerwicklung 31 und darüber hinaus aus zwei ebenfalls auf der Rotorwelle 25 nebeneinander mit Abstand festgelegten Schleifringen 32, 33, die mit je einem Ende der Erregerwicklung 31 elektrisch verbunden sind. Auf die beiden Schleifringe 32 und 33 drückt je eine federbelastete Schleifbürste 34 bzw. 35, die in einem beiden gemeinsamen Bürstenhalter 36 geführt sind und die der mit dem Klauenpolrotor 20 umlaufenden Erregerwicklung 31 den Erregerstrom zuführen; der aus Kunststoff bestehende Bürstenhalter 36 ist am Lagerschild 13 festgelegt. Je stärker der Erregerstrom und je größer die Drehzahl des Klauenpolrotors 20 ist, umso höher ist die im Drehstromgenerator erzeugte Spannung; der der Erregerwicklung 31 zugeführte Erregerstrom wird von einem (nicht dargestellten) zumeist am Wechselstromgenerator 10 befestigten Spannungsregler derart bemessen, so daß die Generatorspannung über den

2

gesamten Drehzahlbereich des Wechselstromgenerators bzw. des betreffenden (nicht dargestellten) Fahrzeugmotors konstant bleibt, und zwar unabhängig von Belastung und Drehzahl.

Der Klauenpolrotor 20 hat an jedem seiner beiden Polräder 26 und 27 bevorzugt sechs Klauenpole 28 bzw. 29, die fingerförmig, jedoch mit isolierendem Abstand zueinander ineinandergreifen. Je ein Klauenpol 28 des polrades 26 und ein daneben befindlicher Klauenpol 29 des Polrades 27 bilden gemeinsam ein Klauenpol-Paar 28/29; die beiden Klauenpole 28 und 29 haben unterschiedliche Polarität und bewirken ein Magnetfeld. Bei sich drehendem Klauenpolrotor 20 wird durch derartige Magnetfelder in den Wechselstromwicklungen 23 der nutzbare elektrische Strom des Wechselstromgenerators 10 erzeugt. Der zwischen den Klauenpolen 28 bzw. 29 und der Ständerbohrung 21 befindliche Luftspalt ist mit 37 bezeichnet.

Außerhalb des Gehäuses 11 des Wechselstromgenerators 10 ist auf der Rotorwelle 25 eine dem Antrieb des Wechselstromgenerators 10 dienende Riemenscheibe 38 angeordnet, die mittels einer auf einem Gewindestutzen 39 der Rotorwelle 25 aufgeschraubten Mutter 40 festgelegt und mittels einer Paßfeder 41 gegen Verdrehung gesichert ist. Die Riemenscheibe 38 bildet dabei ein Bauteil mit einem Lüfter 42, der für den Transport von Kühlluft durch den Wechselstromgenerator 10 sorgt; der Lüfter 42 kann alternativ aber auch ein separates Bauteil sein, welches sowohl außerhalb als auch innerhalb des metallischen Gehäuses 11 angeordnet sein kann.

Zur Befestigung des Wechselstromgenerators 10 am Kraftfahrzeugmotor ist das antriebsseitige Lagerschild 12 mit einem Schwenkarm 44 versehen; ein zweites, für die genaue Fixierung des Wechselstromgenerators 10 zweckmäßiges Befestigungsmittel ist in der Figur 1 nicht dargestellt.

In den Figuren 2 bis 4 ist das Polrad 26 mit seinen sechs auf seinem Umfang gleichmäßig verteilten Klauenpolen 28 gezeigt. Das Polrad 26 und die Klauenpole 28 sind im vorliegenden Beispiel aus einem einzigen Stück aus magnetisierbarem Material hergestellt, können aber auch aus mehreren Einzelteilen zusammengesetzt sein. Das Polrad 27 mit seinen Klauenpolen 29 entspricht im wesentlichen dem Polrad 26 mit seinen Klauenpolen 28. Im Zentrum des Polrades 26 befindet sich eine Mittenbohrung 45, in der die Rotorwelle 25 festgelegt ist; die Festlegung wird bevorzugt durch einen Rändelbereich 46 auf dem entsprechenden Bereich der Rotorwelle 25 und zusätzliche Verstemmbereiche 47 zwischen dem Rand der Mittenbohrung 45 des Polrads 26 und der Rotorwelle 25 bewirkt.

Die in den Figuren 2 bis 4 dargestellten, im wesentlichen zur Rotorwelle 25 parallel ausgerichteten Klauenpole 28 des Polrades 26 sind in ihrer Längserstreckung prinzipiell V- bzw. trapezförmig und haben dabei ihre größte Breite im scheibenförmigen Bereich des Polrades 26. Im scheibenförmigen Bereich des Polrades 26 haben die Klauenpole 28 auch ihre größte Dicke, d. h. daß die Dicke der Klauenpole 28 zu ihren freien Enden hin abnimmt. Anstelle dieser Ausführungsform der Klauenpole 28 sind aber auch Abweichungen davon möglich, z. B. Klauenpole von konstanter Breite und/oder Dicke oder auch Klauenpole, deren gedachte Mittellinien nicht parallel zur Rotorwelle 25 verlaufen oder in ihrer Längserstreckung ein schiefwinkliges Dreieck, Trapez oder Rechteck bilden.

Die in Richtung der Ständerbohrung 21 weisenden äußeren Oberflächen 43 der Klauenpole 28 bzw. 29 unterteilen sich - in Umlaufrichtung D des Klauenpolrotors 20 gesehen - in einen Vorderbereich 48, der der Ständerbohrung 21 am nahesten gegenübersteht und bevorzugt den Bogen eines Kreises beschreibt, dessen Radius etwa im Mittelpunkt des Klauenpolrotors 20 liegt; der vordere Rand der Klauenpole 28 bzw. 29 kann gegebenenfalls als schwache Abrundung oder auch als Fase ausgebildet sein.

Dem Vorderbereich 48 der äußeren Oberfläche 43 der Klauenpole 28 bzw. 29 schließen sich dann - wiederum in Drehrichtung D gesehen - zwei ebene Flächen 50 und 51 an; die zweite ebene Fläche 51 endet am rückwärtigen Rand 52 der äußeren Oberfläche 43 der Klauenpole 28 bzw. 29. Die beiden ebenen Flächen 50 und 51 verlaufen parallel zum rückwärtigen Rand 52, weisen jedoch eine unterschiedliche Neigung auf: Die erste ebene Fläche 50 bildet zu einer an den Vorderbereich 48 des Klauenpols 28 bzw. 29 angelegten Tangente 53 einen kleineren Winkel $\alpha$ als die zweite ebene Fläche 51, die einen Winkel $\beta$ mit der Tangente 53 einschließt. Bei einer bevorzugten Ausführungsform beträgt $\alpha$ = 19 Grad und $\beta$ = 38 Grad; abhängig vom jeweiligen Wechselstromgenerator-Typ kann $\alpha$ aber auch zwischen 15 und 25 Grad und $\beta$ zwischen 30 und 50 Grad liegen. Die in Umfangsrichtung D des Klauenpolrotors 20 gemessene Breite der ersten ebenen Fläche 50 hat beispielsweise 4 Millimeter und die der zweiten ebenen Fläche 51 beispielsweise 2 Millimeter; die Wahl der vorstehenden Breiten der ebenen Flächen 50 bzw. 51 ist ebenfalls von dem jeweiligen Wechselstromgenerator-Typ abhängig.

Das wesentliche Merkmal ist die Ebenheit der Flächen 50 und 51, infolge welcher außer der geräuschreduzierenden Wirkung weitere Vorteile erzielbar sind, nämlich die Herstellung gut reproduzierbarer und kostengünstiger Klauenpole 28 und 29 und das Vermeiden von Energieverlust des Wechselstromgenerators infolge der vorgeschlagenen Maßnahmen.

In der Figur 5 ist das Polrad 26' eines anderen Wechselstromgenerators dargestellt. Bei dem Polrad 26' ist der angeformte Klauenpol 28' derart gestaltet, daß die beiden ebenen Flächen 50' bzw. 51' parallel zur

3

Rotorwelle 25 verlaufen. Die Drehrichtung dieses Polrades 26' ist mittels eines Pfeiles und mit D gekennzeichnet.

In der Figur 6 ist eine weitere Ausführungsform eines Polrades 26″ gezeigt. Bei diesem Polrad 26″ sind die ebenen Flächen 50″ und 51″ wiederum anders ausgebildet, und zwar verläuft die ebene Fläche 50' parallel zur Rotorwelle 25 und die ebene Fläche 51″ des Klauenpols 28″ verläuft parallel zum rückwärtigen Rand 52″ des Klauenpoles 28″. Auch in diesem Beispiel ist die Drehrichtung des Polrades 26″ mittels eines Pfeiles und mit D gekennzeichnet.

Die Neigungswinkel $\alpha$ und $\beta$ der ebenen Flächen 50', 50″ bzw. 51' und 51″ in den Figuren 5 und 6 sind von Fall zu Fall dem Geräusch- und Leistungsverhalten des Drehstromgenerators 10 anzupassen.

## Patentansprüche

1. Wechselstromgenerator, insbesondere Drehstromgenerator für das Bordnetz von Kraftfahrzeugen, mit einem lamellierten Ständer, der in einem metallischen Gehäuse gehalten ist, auf seine Ständerbohrung hinweisende Nuten mit darin enthaltenen Wechselstromwicklungen besitzt und koaxial in seiner Ständerbohrung einen mit einer Rotorwelle versehenen Klauenpolrotor aufweist, wobei der Klauenpolrotor mehrere über seinen Umfang gleichmäßig verteilte, fest mit der Rotorwelle verbundene Klauenpol-Paare hat, welche koaxial auf der Rotorwelle und mit Abstand zueinander angeordnet sind, im wesentlichen parallel zur Rotorwelle verlaufen, mit ihren äußeren Oberflächen zur Ständerbohrung des Ständers einen ringförmigen Luftspalt bilden, jeweils aus zwei Klauenpolen unterschiedlicher Polarität bestehen, wobei - in Drehrichtung des Rotors gesehen - der rückwärtige Rand der äußeren Oberfläche jedes Klauenpoles einen größeren Abstand zur Ständerbohrung aufweist als der Vorderbereich der äußeren Oberfläche des jeweiligen Klauenpols, dadurch gekennzeichnet, daß der Vorderbereich (48) der äußeren Oberfläche (43) jedes Klauenpols (28, 29) zum rückwärtigen Rand (52) hin mittels zwei ebenen, quer zur Drehrichtung D verlaufenden Flächen (50, 51) übergeht, von denen die näher zum rückwärtigen Rand (52) angeordnete ebene Fläche (51) einen größeren Neigungswinkel ($\beta$) mit einer auf der äußeren Oberfläche (43) im Bereich des engsten Luftspaltes (37) des jeweiligen Klauenpols (28, 29) liegenden Tangente (53) bildet als die davor in Richtung Vorderbereich (48) befindliche ebene Fläche (50).

2. Wechselstromgenerator nach Anspruch 1, dadurch gekennzeichnet, daß die ebenen Flächen (50, 51) im wesentlichen parallel zum rückwärtigen Rand (52) des jeweiligen Klauenpols (28, 29) verlaufen.

3. Wechselsromgenerator nach Anspruch 1, dadurch gekennzeichnet, daß die ebenen Flächen (50', 51') der Klauenpole (28') im wesentlichen parallel zur Rotorwelle (25) verlaufen.

4. Wechselstromgenerator nach einem der Ansprüche 1 bis 3, dadurch gekennzeichnet, daß die äußeren Oberflächen (43) der Klauenpole (28, 29) im wesentlichen eine V- bzw. trapezförmige Form aufweisen, wobei ihre größte Breite jeweils im Bereich des zugehörigen scheibenförmigen Polrades (26, 27) liegt.

5. Wechselstromgenerator nach Anspruch 1, dadurch gekennzeichnet, daß eine der ebenen Flächen (50″) im wesentlichen parallel zur Rotorwelle (25) und die andere der ebenen Flächen (51″) im wesentlichen parallel zum rückwärtigen Rand (52″) des jeweiligen Klauenpols (28″) verläuft.

6. Wechselstromgenerator nach einem der Ansprüche 1 bis 5, dadurch gekennzeichnet, daß die erste ebene Fläche (50) mit einer am Vorderbereich (48) der äußeren Oberfläche (43) anliegenden Tangente (53) einen Winkel ($\alpha$) zwischen 15 und 25 Grad und die zweite ebene Fläche (51) mit der Tangente (53) einen Winkel ($\beta$) zwischen 30 und 50 Grad einschließen.

## Claims

1. Alternating-current generator, in particular three-phase generator for the electrical system of motor vehicles, comprising a laminated stator which is held in a metallic casing, has slots pointing towards its stator hole, with alternating-current windings contained therein and exhibits coaxially in its stator hole a claw pole rotor provided with a rotor shaft, in which arrangement the claw pole rotor has several claw pole pairs which are securely connected to the rotor shaft and are uniformly distributed over its circumference, which are coaxially arranged on the rotor shaft and at a distance from one another, extend essentially in parallel with the rotor shaft, form an annular air gap with their outer surfaces with respect to the stator hole of the stator, in each case consist of two claw poles of different polarity, the rear edge - seen in the direction of rotation of the rotor - of the outer surface of each claw pole exhibiting a greater distance from the stator hole than the front area of the outer surface of the respective claw pole, characterized in that the front area (48) of the outer surface (43) of each claw pole (28, 29) changes towards the rear edge (52) by means of two plane areas (50, 51) extending transversely with respect to the direction of rotation D, of which the plane area (51) arranged closer to the rear edge (52) forms a greater angle of inclination (β) with a tangent (53) located on the outer surface (43) in the area of the narrowest air gap (37) of the respective claw pole (28, 29) than the plane area (50) located in front of it in the direction of the front area (48).

2. Alternating-current generator according to Claim 1, characterized in that the plane areas (50, 51) extend essentially in parallel with the rear edge (52) of the respective claw pole (28, 29).

3. Alternating-current generator according to Claim 1, characterized in that the plane areas (50', 51') of the claw poles (28') extend essentially in parallel with the rotor shaft (25).

4. Alternating-current generator according to one of Claims 1 to 3, characterized in that the outer surfaces (43) of the claw poles (28, 29) essentially exhibit a V- or trapezoidal shape, their greatest width in each case being located in the area of the associated disc-shaped pole wheel (26, 27).

5. Alternating-current generator according to Claim 1, characterized in that one of the plane areas (50") extends essentially in parallel with the rotor shaft (25) and the other plane area (51") extends essentially in parallel with the rear edge (52") of the respective claw pole (28").

6. Alternating-current generator according to one of Claims 1 to 5, characterized in that the first plane area (50) encloses an angle (α) of between 15 and 25 degrees with a tangent (53) adjoining the front area (48) of the outer surface (43) and the second plane area (51) encloses an angle (β) of between 30 and 50 degrees with the tangent (53).

## Revendications

1. Générateur de courant alternatif, notamment générateur de courant triphasé pour le réseau de bord de véhicules automobiles avec un stator lamellé qui est maintenu dans un carter métallique et qui comporte sur son alésage de stator, des gorges contenant des enroulements pour le courant alternatif et co-axialement dans son alésage de stator un rotor à pôles à griffes muni d'un arbre de rotor, et ce rotor à pôles à griffes a plusieurs paires de pôles à griffes répartis uniformément sur sa périphérie et solidaires de l'arbre du rotor, qui sont disposés co-axialement sur l'arbre de rotor et à une certaine distance les unes des autres, en s'étendant essentiellement parallèlement à l'arbre du rotor, et dont les surfaces extérieures délimitent par rapport à l'alésage du stator, un entrefer annulaire, ces paires étant respectivement constituées par deux pôles à griffes de polarité différente, tandis que, si l'on regarde dans le sens de rotation du rotor, le bord arrière de la surface extérieure de chaque pôle à griffes est à une plus grande distance de l'alésage du standard que la zone antérieure de la surface extérieure du pôle à griffes considéré, générateur de courant alternatif caractérisé en ce que la zone antérieure (48) de la surface extérieure (43) de chaque pôle à griffes (28, 29) se prolonge vers le bord arrière (52) par deux surfaces planes (50, 51) s'étendant transversalement par rapport à la direction de rotation D, surfaces dont celle (51) la plus proche du bord arrière (52) délimite avec une tangente (53) se situant sur la surface extérieure (43) au voisinage de l'entrefer le plus étroit (37) du pôle à griffes considéré, un angle d'inclinaison (β) supérieur à celui de la surface plane (50) se trouvant en avant dans la direction de la zone antérieure (48).

2. Générateur de courant alternatif selon la revendication 1, caractérisé en ce que les surfaces planes (50, 51) s'étendent dans l'ensemble parallèlement au bord arrière (52) du pôle à griffes considéré (28, 29).

3. Générateur de courant alternatif selon la revendication 1, caractérisé en ce que les surfaces planes (50', 51') du pôle à griffes (28') s'étendent dans l'ensemble parallèlement à l'arbre (25) du rotor.

4. Générateur de courant alternatif selon une des revendications 1 à 3, caractérisé en ce que les surfaces extérieures (43) des pôles à griffes (28, 29) ont essentiellement une forme en V, ou bien une forme trapézoïdale, tandis que leurs plus grandes largeurs se situent respectivement au voisinage de la roue polaire (26, 27) en forme de disque correspondante.

5. Générateur de courant alternatif selon la revendication 1, caractérisé en ce qu'une (50") des surfaces planes est essentiellement parallèle à l'arbre (25) tandis que l'autre (51") de ces surfaces planes est essentiellement parallèle au bord arrière (52") du pôle à griffes (28") correspondant.

6. Générateur de courant alternatif selon une des revendications 1 à 5, caractérisé en ce que la première surface plane (50) délimite avec une tangente (53) s'appliquant à la zone antérieure (48) de la surface extérieure (43), un angle (α) compris entre 15 et 25°, tandis que la seconde surface plane (51) délimite avec cette tangente (53) un angle (β) se situant entre 30 et 50°.

FIG.1

FIG.2

FIG.3

FIG.4

FIG.5

FIG.6